# FASCICULE DE BREVET EUROPEEN

(11) **EP 0 486 864 B1**
(45) Date de publication et mention de la délivrance du brevet: **19.03.1997**
(21) Numéro de dépôt: 91118764.9
(22) Date de dépôt: 04.11.1991
(51) Int. Cl.: H04Q 11/04

(54) **Terminal principal, pour réseau numérique à intégration de services**
Hauptendstelle für ein dienstintegrierendes Digitalnetz
Principal terminal for integrated services digital network

(30) Priorité: 07.11.1990 FR 9013804
(43) Date de publication de la demande: 27.05.1992
(73) Titulaire: ALCATEL BUSINESS SYSTEMS, F-75008 Paris (FR)
(72) Inventeur: Douhet, Gérard, F-67640 Fegersheim (FR)
(74) Mandataire: Weinmiller, Jürgen

(56) Documents cités:
- GB-A- 2 220 325
- US-A- 4 792 800
- PROCEEDINGS OF THE INTERNATIONAL SYMPOSIUM ON SUBSCRIBER LOOPS AND SERVICES, Tokyo, 29 septembre - 3 octobre 1986, pages 150-155; M. FUJIOKA et al.: "Integrated call control and ISDN basic access interface system for advanced services"

## Description

L'invention concerne un terminal d'usager, dit principal, pour réseau numérique à intégration de services.

De manière connue, le Comité Consultatif International Télégraphique et Téléphonique (CCITT) a publié un ensemble de recommandations relatives aux réseaux numériques à intégration de services (RNIS) qui permet de définir un modèle architectural de base pour ces réseaux avec notamment un certain nombre de points de référence correspondants aux frontières communes aux groupements fonctionnels constitutifs de tels réseaux.

En particulier, il est connu que la structure reliant une installations d'usager à un commutateur de rattachement dans le réseau RNIS est susceptible de comporter une suite de un à quatre groupements s'interfaçant au niveau des points de référence respectivement dénommés R, S, T, U et V. Ce dernier correspond à la frontière entre le commutateur de rattachement d'une installation et l'équipement d'extrémité de transmission référencé TL, qui est associé à ce commutateur et qui termine la liaison de transmission desservant l'installation.

Le point de référence U correspond à l'interface de transmission entre un équipement d'extrémité TL et un équipement dénommé terminaison numérique de réseau TNR qui est situé au niveau de l'installation d'usager.

Le point de référence T correspond à l'interface, dite d'accès de base, entre une terminaison numérique de réseau TNR et un équipement dénommé terminaison numérique d'abonné TNA ou NT2 qui dans la pratique correspond à un commutateur privé, une installation d'intercommunication, un réseau local d'entreprise...

Le point de référence S correspond à l'interface entre une terminaison numérique d'abonné TNA et un terminal d'usager TE de type RNIS ou entre une terminaison numérique d'abonné TNA et un adaptateur référencé AT, lorsque le terminal d'usager desservi est un terminal qui n'a pas été prévu pour être raccordé à un réseau RNIS, par exemple un poste téléphonique analogique existant.

De manière connue, un certain nombre de caractéristiques sont associées aux points de référence évoqués ci-dessus, en particulier en ce qui concerne les débits dits utiles qui correspondent aux canaux de transmission accessibles aux usagers et qui diffèrent, comme on le sait, des débits en ligne plus élevés.

Ainsi le débit utile au niveau d'un accès de base, tel qu'évoqué ci-dessus, correspond à 144 kbit/s, un ou plusieurs accès étant susceptibles de desservir une installation d'usager.

L'accès de base correspond à une structure multiplexe associant deux canaux désignés par B ayant chacun un débit utile de 64 kbit/s à un canal désigné par D ayant un débit de 16 kbit/s. Les canaux B dont le débit correspond à celui qui est nécessaire à la transmission de signaux de parole codés MIC permettent aussi la transmission de données numériques pour les usagers, alors que le canal D transmet essentiellement de la signalisation usager-réseau et accessoirement des données à faible débit ou à apparition sporadique pour les usagers.

Dans le cas d'installations individuelles légères, telles que connues par exemple du document US-A-4 792 800, il est envisagé de relier plusieurs terminaux TE, notamment de type RNIS, en parallèle au niveau d'une interface S, via une liaison de type bus, dite bus S. La liaison bus aboutit alors à un équipement, dit régie d'abonné, qui s'insère entre les points de référence S et T et qui se connecte à cet effet à un terminaison numérique de réseau TNR, telle qu'évoquée ci-dessus.

Les terminaux TE des usagers connectés en parallèle à une même liaison bus S ont la possibilité d'établir soit une communication, soit deux communications simultanées via le réseau RNIS ou encore une unique communication locale entre deux terminaux connectés à la liaison bus S, cette dernière possibilité interdisant alors toute autre communication sortante et surtout entrante, via le réseau RNIS, ce qui est particulièrement pénalisant.

De même, il n'est pas possible de réaliser de mises en conférence locales entre postes reliés à la même liaison bus S.

L'invention propose donc un terminal d'usager, dit principal, qui, de type RNIS, puisse se substituer à l'ensemble des équipements se plaçant en aval d'un point de référence U par rapport au réseau RNIS et qui permette la mise en communication simultanée d'une pluralité d'autres terminaux d'usager susceptibles d'être reliés à ce terminal principal à des niveaux divers.

Selon une caractéristique de l'invention, le terminal principal qui est doté d'un équipement d'interface entre les niveaux de points de référence U et S et qui comprend un circuit émetteur-récepteur de données au niveau du point de référence U, destiné à être raccordé à une ligne numérique d'abonné, un circuit contrôleur de communications qui assure le transfert des informations transitant par le canal D sur la ligne numérique d'abonné et un circuit d'accès abonné pour raccordement d'au moins un terminal, dépendant, de type RNIS, au niveau de point de référence S, comporte aussi une matrice de commutation temporelle insérée entre le circuit émetteur-récepteur, auquel elle est reliée en parallèle avec le circuit contrôleur de communications, et le circuit d'accès abonné, ladite matrice étant aussi reliée à un équipement de poste numérique que comporte le terminal principal considéré et étant commandée par un processeur de gestion que comporte ce terminal principal pour notamment superviser l'équipement de poste numérique, le circuit contrôleur de communications et le circuit d'accès abonné.

L'invention, ses caractéristiques et ses avantages sont précisés dans la description qui suit, en liaison avec les figures répertoriées ci-dessous.

La figure 1 présente un schéma d'un terminal principal selon l'invention.

La figure 2 présente un synoptique des liaisons par canaux B au travers d'un terminal principal.

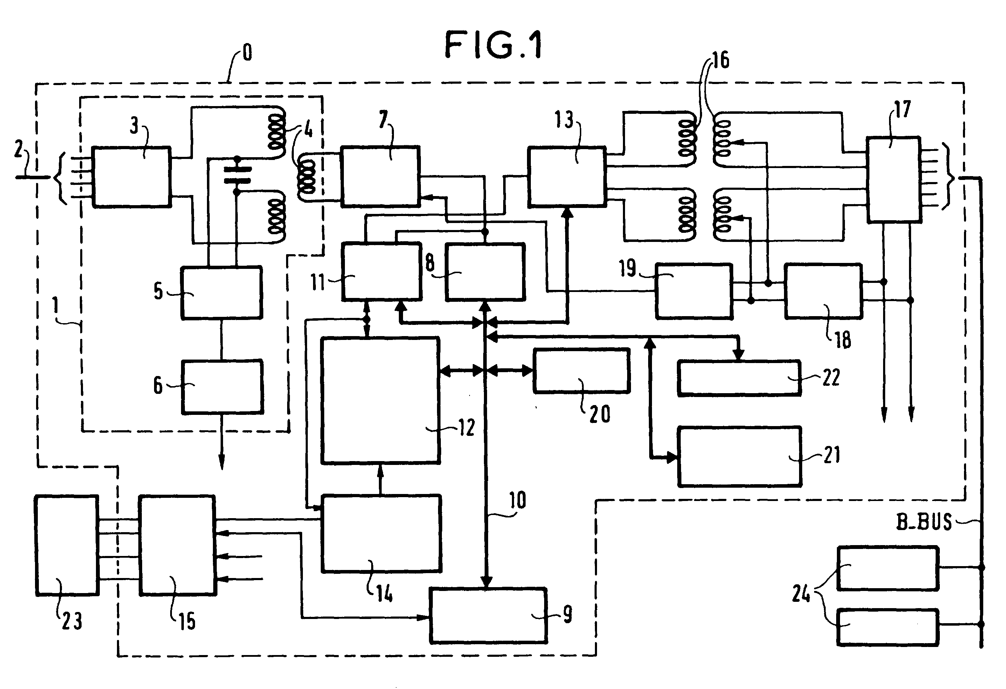

Le terminal d'usager 0, dit principal, schématiquement présenté en figure 1, correspond par exemple à un poste téléphonique multifonction avec par exemple un fax et/ou un écran d'affichage d'image et éventuellement dans ce cas un dispositif de prise de vue, il est destiné à venir se raccorder au niveau du point de référence U d'un réseau numérique à intégration de services RNIS, il est bien entendu susceptible de venir se connecter au niveau d'un point de référence correspondant d'un réseau numérique privé à intégration de services RPIS.

A cet effet, ce terminal principal 0 comporte une interface 1, de type U, destiné à être relié à un terminal de ligne distant, non figuré, auquel il se raccorde par l'intermédiaire d'une ligne numérique d'abonné 2, via un connecteur 3.

Cette ligne d'abonné 2 est prévue de manière connue en soi pour permettre un débit utile de 144 kbit/s correspondant à une structure de transmission composée de deux canaux B et d'un canal D, tels qu'évoqués ci-dessus, dans chacun des deux sens inverses de transmission.

Le connecteur 3 est relié au primaire d'un transformateur d'isolement 4 de manière à permettre une transmission bidirectionnelle de données numériques par l'intermédiaire de ce primaire et du secondaire du transformateur 4, entre le terminal principal 0 et le terminal de ligne, distant, via la ligne d'abonné 2.

Le primaire du transformateur 4 comporte deux enroulements distincts pour permettre une alimentation du terminal principal 0 par les fils de la ligne d'abonné 2, via un classique circuit 5 de protection contre les surtensions et les surintensités et un convertisseur abaisseur continu-continu 6.

Le primaire du transformateur 4 est relié à un circuit émetteur-récepteur 7 à annulateur d'écho conçu pour interfacer une ligne d'abonné au niveau accès de base, tel par exemple un circuit PEB 2091 commercialisé par la société SIEMENS AKTIENGESELLSCHAFT, qui permet une transmission bidirectionnelle de données numériques au niveau d'un point de référence U, selon les normes de relatives à la couche physique 1 de l'Institut des Standards Nationaux Américain (ANSI).

L'émetteur-récepteur 7 est relié, d'une part, à un circuit contrôleur de communications 8 qui assure les fonctions liées à la couche liaison 2, c'est-à-dire celles qui sont relatives au transfert des informations transitant par le canal D, d'autre part à une matrice de commutation temporelle 11. Le contrôleur de communications 8 comporte un port d'accès permettant de le relier à un processeur de gestion 9 du terminal principal 0, via un bus d'exploitation 10 pour les échanges d'informations de signalisation transmises en canal D et un port d'accès, de type série, par lequel il est relié d'une part à l'émetteur-récepteur 7.

Le processeur 9 est classiquement accompagné d'un ensemble 20 de mémoires mortes et/ou vives certaines de ces dernières étant sauvegardées de manière connue en soi. Le contrôleur de communications 8 est par exemple un modèle PEB 2070 commercialisé par la société déjà évoquée ci-dessus.

La matrice 11 est par exemple de type réseau de portes et permet de commuter les informations transmises par canaux B entre l'émetteur-récepteur 7 et un agencement de poste numérique 12 ou un circuit d'accès abonné 13, sous la commande du processeur de gestion 9 auquel la matrice 11 est reliée par le bus 10. A cet effet, l'agencement 12 et le circuit d'accès sont reliés chacun par une liaison série synchrone à la matrice 11.

L'agencement 12 est par exemple d'un type classique où un circuit cofidec, non représenté, assure la conversion des signaux numériques provenant d'un canal B en signaux analogiques reproductibles par les équipements audio du poste, tels que combiné téléphonique ou haut-parleur, comportés par le terminal principal 0, ainsi que la conversion inverse des signaux analogiques captés par un microphone du terminal principal 0 en signaux codés MIC susceptibles d'être transmis, via un canal B.

L'agencement 12 comporte aussi de manière connue dans ce cas les différents circuits et dispositifs nécessaires, tels qu'un circuit de sonnerie, un circuit de numérotation d'appel et autres, il est susceptible de comporter des circuits auxiliaires optionnels, tels qu'un circuit d'amplification des sons, un circuit d'exploitation mains libres ou un circuit pour combiné sans fil, qui, usuels dans ce domaine, ne sont pas représentés ici.

L'agencement 12 peut aussi comporter des circuits et dispositifs permettant l'affichage sur écran d'images transmises éventuellement avec des sons correspondants au moyen d'un ou de deux canaux B, ou encore pour l'analyse et la reproduction de documents, il peut également comporter des circuits et dispositifs pour la prise de vue si le terminal offre des possibilités visiophoniques, les données d'image et de son correspondant étant prévues transmise de manière analogue à celle prévue ci-dessus pour les images à afficher.

L'agencement 12 est supervisé par le processeur 9 du terminal principal 0, via le bus 10 auquel il est relié par un port; le bus 10 dessert aussi d'autres dispositifs classiques communément comportés par les terminaux et qui sont ici présents dans le terminal principal 0, tels un clavier 21 de commande notamment de numérotation et un afficheur 22 par exemple à cristaux liquides, ces dispositifs sans rapport direct avec l'invention n'étant rappelés que pour mémoire.

Un adaptateur 14 est relié au port de matrice 11 desservant l'équipement 12, en parallèle avec ce dernier, il est destiné à permettre le raccordement d'un terminal téléphonique externe 23 au niveau d'un point de référence R, tel que défini ci-dessus en liaison avec la structure RNIS.

Cet adaptateur 14 est par exemple un adaptateur pour terminal vidéotex apte à émettre et recevoir des données alphanumériques sous forme de signaux multifréquences par l'intermédiaire d'une ligne téléphonique de type analogique.

Dans ce cas, l'adaptateur 14 comporte un cofidec non représenté qui vient se raccorder au port de matrice 11 en parallèle avec le cofidec que comporte l'agencement 12, la liaison réalisée restant de type série synchrone, les données étant simultanément transmises par le port commun de la matrice 11 vers l'équipement 12 et vers l'adaptateur 14 ou alternativement émises par l'un ou l'autre de ces derniers, vers ce port commun.

L'adaptateur 14 comporte aussi, dans ce cas, un circuit deux fils/quatre fils relié par ces derniers au cofidec qu'il contient et par les deux fils à un connecteur 15 permettant le raccordement du terminal externe 23, ici vidéotex.

Ce dernier reçoit et émet des signaux analogiques de type audio, qui différent de ceux transmis par une ligne téléphonique analogique usuelle dans la mesure où ils ne sont pas combinés à un courant continu d'alimentation et qui correspondent aux données alphanumériques transmises en code multifréquence dans l'exemple d'application évoqué ci-dessus.

En dernier lieu, l'adaptateur 14 est relié à l'équipement 12 par une liaison qui sert à transmettre les tonalités modem pour traduction de ces dernières sous forme sonore à destination de l'usager par l'intermédiaire du ou d'un des transducteurs sonores que comporte le terminal principal 0.

Le connecteur 15 est relié au processeur 9 par une liaison de type série pour permettre des échanges de signalisation entre le terminal externe 23 et ce processeur 9.

Le connecteur 15 comporte aussi des bornes permettant d'alimenter au moins partiellement et suivant le cas le terminal externe 23 à partir du terminal principal 0 ou inversement d'assurer une alimentation partielle en sens inverse du terminal principal par le terminal externe, les circuits usuels nécessaires n'étant pas représentés ici dans la mesure où ils sont bien connus de l'homme de métier.

Le circuit d'accès abonné 13 assure une adaptation électrique de transmission quatre fils pour permettre la connexion de terminaux voix-données, préférablement de type RNIS, tel 24, au terminal principal 0, ainsi que les fonctions de contrôleur de communications pour ces terminaux, c'est par exemple un circuit PEB 2085 commercialisé par la même société que les deux circuits PEB 2070 et PEB 2091 évoqués ci-dessus.

A cet effet, il est supervisé par le processeur 9 du terminal principal 0 via le bus 10 et il est relié à un port de la matrice 11 par une liaison série synchrone semblable à celle qui relie la matrice 11 à l'équipement de poste numérique 12.

Un transformateur 16 est relié aux quatre fils du circuit deux fils/ quatre fils du circuit d'accès abonné 13 , il comporte à cet effet deux enroulements distincts tant au primaire qu'au secondaire.

Les quatre extrémités des deux enroulements, ici dit secondaire, non reliés au circuit d'abonné 13 sont raccordés à quatre bornes d'un connecteur 17 par une liaison à quatre fils, ce connecteur correspondant au niveau de point de référence S et étant apte à constituer un port d'accès pour un bus dit de type S auquel de un à plusieurs terminaux externes 24, de type RNIS, sont susceptibles de se raccorder en parallèle.

Le connecteur 17 comporte aussi des bornes permettant d'alimenter au moins partiellement le ou les terminaux externes 24 raccordés par l'intermédiaire d'un circuit fantôme connecté au point milieu de chacun des deux enroulements dits secondaires du transformateur 16, via un classique circuit de régulation et de protection 18, ainsi qu'un éventuel terminal externe 23 raccordé au connecteur 15 dont les bornes d'alimentation sont alors reliées par des conducteurs ici référencés A à des bornes du connecteur 17.

Dans l'exemple proposé ici les bornes du connecteur 17 qui alimentent le circuit 18 et le connecteur 15, via les fils A sont elles-mêmes reliées à une alimentation en courant continu non figurée qui vient se raccorder avec la liaison bus S au connecteur 17.

Un circuit 19 de détection de présence d'alimentation est relié aux fils de sortie du circuit 18 qui alimente le circuit fantôme pour signaler au circuit émetteur-récepteur 7 à des fins de signalisation les éventuels défauts d'alimentation affectant le bus S.

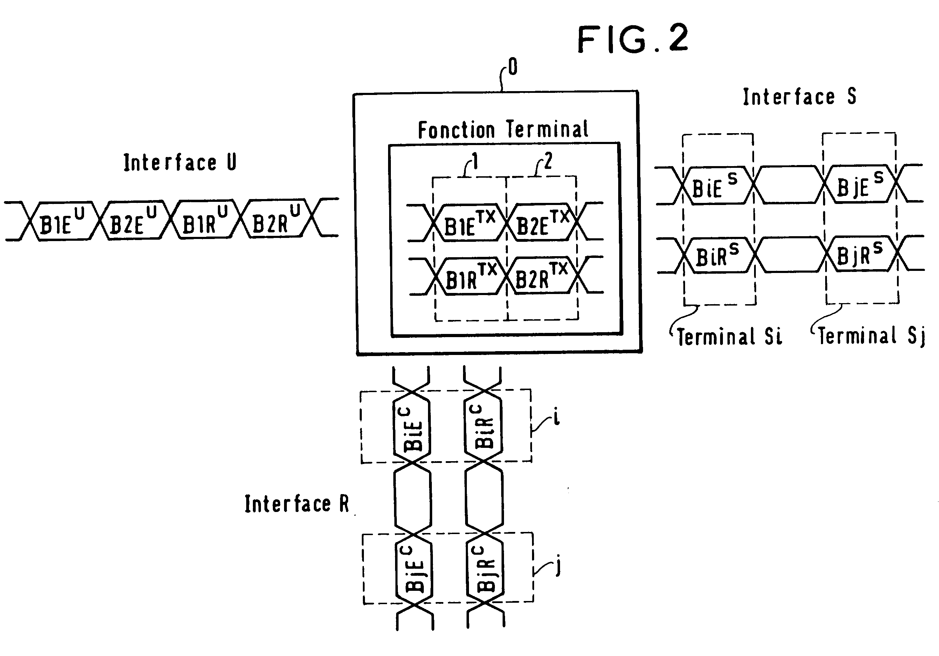

L'utilisation du terminal principal 0 pris isolément est pratiquement identique à celle d'un poste terminal RNIS qui serait connecté au niveau d'un point de référence S de la structure RNIS, le terminal principal 0 exploitant alors un ou deux canaux voix-données B bidirectionnels de la liaison 2 et le canal D correspondant, les différents canaux unidirectionnels concernés étant référencés B1E^{U}, B2E^{U} sur la figure 2 pour les données émises à partir du terminal principal 0 et B1R^{U}, B2R^{U} pour les données à recevoir, via la liaison 2. Les canaux unidirectionnels exploités par le terminal principal 0 pour ses besoins propres sont ici référencés B1E^{Tx}, B2E^{Tx},B1R^{Tx}, B2R^{Tx}.

Les canaux unidirectionnels exploitables par les terminaux externes 24, de type RNIS, sont référencés BiE^{S},BjE^{S}, BiR^{S}, BjR^{S}, alors que ceux qui sont exploitables par le terminal extérieur 23 connecté au niveau d'interface R sont référencés BiE^{C}, BjE^{C}, BiR^{C}, BjR^{C}.

Si l'on désigne par Bk^{l} et Bmⁿ deux des terminaux d'un ensemble comportant un terminal principal 0 et des terminaux externes 23, 24 interconnectés par son intermédiaire il est possible, notamment grâce à la matrice 11 et à un éventuel bus S de réaliser les diverses communications définies par un choix simultané de deux des valeurs, l'une de k ou de m et l'autre de l ou de n, choisies tels que k ou m soit égal à 1, 2, i ou j et que simultanément 1 ou n soit égal à C, U, Tx ou R, jusqu'à utilisation maximale des canaux disponibles.

Il est possible d'exploiter les canaux voies-données bidirectionnels B1E^{U}-B1R^{U} et B2E^{U}-B2R^{U} de la liaison numérique d'abonné 2 pour établir une communication par deux canaux B, avec soit le terminal principal 0, soit l'un des terminaux 24 ou deux communications à un canal B impliquant deux des terminaux 0, 23, 24 interconnectés.

Grâce à la matrice 11, l'exploitation des canaux voies-données B, disponibles sur la liaison numérique d'abonné 2, par le terminal principal 0 est sans influence sur d'éventuelles communications locales entre terminaux externes 24 ou 23 et 24.

De même l'exploitation d'un seul des canaux B disponibles sur la liaison numérique 2 par l'un des terminaux 0, 23, 24 interconnectés, laisse l'autre disponible pour n'importe lequel des autres terminaux interconnectés.

Ceci facilite bien entendu la réception des appels entrants tant que les canaux B et D de la liaison numérique d'abonné 2 ne sont pas totalement occupés puisqu'éventuellement un des terminaux externes peut se substituer au terminal principal en cas d'appel si les canaux propres à ce terminal principal sont alors indisponibles pour cet usage.

Il est aussi possible de réaliser des conférences tripartites, par exemple entre deux terminaux locaux interconnectés et un terminal distant ou entre deux terminaux distants et l'un des terminaux locaux interconnectés ou encore entre trois des terminaux interconnectés.

Le terminal principal 0 ainsi réalisé permet aussi de déporter les terminaux 24, si besoin est, en permettant le déport à distance du bus S dont la portée habituelle est limitée à une distance de l'ordre de 150 mètres pour un bus sans restriction de raccordement à un kilomètre pour un terminal 24 unique.

L'ensemble formé par le terminal principal 0 et par les terminaux 23, 24 connectés à lui, qui est raccordé au réseau numérique privé RPIS en aval d'un point de référence U, bénéficie alors des possibilités de déport existant en ce cas, soit de l'ordre de huit kilomètres. Additionnellement, l'incorporation d' un adaptateur 14 pour terminal téléphonique externe 23 raccordable au niveau d'un point de référence R, tel par exemple un terminal vidéotex, permet le déport à distance de ce terminal 23 avec le terminal principal 0 auquel il est raccordé et par l'intermédiaire de celui-ci.

## Revendications

1. Terminal principal, de type RNIS, destiné à se substituer à l'ensemble des équipements se plaçant en aval d'un point de référence U par rapport au réseau RNIS, et doté d'un équipement d'interface entre les niveaux de points de référence U et S qui comprend un circuit émetteur-récepteur (7) de données au niveau du point de référence U, destiné à être raccordé à une ligne numérique d'abonné (2), un circuit contrôleur de communications (8) qui assure le transfert des informations transitant par le canal D sur la ligne numérique d'abonné (2) et un circuit d'accès abonné (13) pour raccordement d'au moins un terminal (24), dépendant, de type RNIS, au niveau de point de référence S, ledit terminal comportant aussi une matrice de commutation temporelle (11) insérée entre le circuit émetteur-récepteur (7), auquel elle est reliée en parallèle avec le circuit contrôleur de communications (8), et le circuit d'accès abonné (13), ladite matrice étant aussi reliée à un équipement de poste numérique (12) que comporte le terminal principal considéré et étant commandée par un processeur de gestion (9) que comporte ce terminal principal pour notamment superviser l'équipement de poste numérique (12), le circuit contrôleur de communications (8) et le circuit d'accès abonné (13).

2. Terminal principal, selon la revendication 1, caractérisé en ce qu'il comporte un adaptateur (14) relié d'une part au port de matrice (10) auquel est connecté l'équipement de poste numérique (12), en parallèle avec ce dernier, et d'autre part à un connecteur pour terminal téléphonique externe (23) raccordable au niveau d'un point de référence R.

## Patentansprüche

1. Hauptendgerät vom ISDN-Typ, das eine Gruppe von Einrichtungen ersetzen soll, die hinter einem Bezugspunkt U bezüglich des ISDN-Netzes liegen, wobei das Hauptendgerät eine Schnittstelleneinrichtung zwischen den Ebenen von Bezugspunkten U und S besitzt, die eine Sende-Empfangsschaltung (7) für Daten in Höhe des Bezugspunkts U zum Anschluß an eine digitale Teilnehmerleitung (2), eine Verkehrskontrollschaltung (8), die den Informationstransfer über den Kanal D auf die digitale Teilnehmerleitung (2) gewährleistet, und eine Teilnehmer-Zugangsschaltung (13) für den Anschluß mindestens eines abhängigen Endgeräts (24) vom Typ ISDN in Höhe des Bezugspunkts S enthält, wobei das Endgerät auch eine Zeitschaltmatrix (11) zwischen der Sende-Empfangsschaltung (7), an die sie parallel mit der Verkehrskontrollschaltung (8) angeschlossen ist, und der Teilnehmer-Zugangsschaltung (13) aufweist, wobei die Matrix auch an eine digitale Geräteeinrichtung (12) angeschlossen ist, die Teil des betreffenden Hauptendgerät ist, und von einem Verwaltungsprozessor (9) des Hauptendgeräts gesteuert wird, um insbesondere die digitale Geräteeinrichtung (12), die Verkehrskontrollschaltung (8) und die Teilnehmer-Zugangsschaltung (13) zu überwachen.

2. Hauptendgerät nach Anspruch 1, dadurch gekennzeichnet, daß es eine Anpassungsschaltung (14) aufweist, die einerseits parallel mit der digitalen Geräteeinrichtung (12) an den Port der Matrix (11) und andererseits an einen Verbinder für ein externes Telefon-Endgerät (23) angeschlossen ist, das in Höhe eines Bezugspunkts R angeschlossen werden kann.

## Claims

1. ISDN type main terminal equipment adapted to be substituted for all of the equipment on the downstream side of a U reference point relative to the ISDN network and provided with an interface equipment between the levels of the U and S reference points, a data sender-receiver circuit (7) at the level of the U reference point adapted to be connected to a digital subscriber line (2), a communication controller circuit (8) which handles the transfer of data conveyed by the D channel to the digital subscriber line (2) and a subscriber interface circuit (13) for connecting at least one ISDN type dependent terminal (24) at the level of the S reference point, said terminal equipment also including a time switching matrix (11) inserted between the sender-receiver circuit (7) to which it is connected in parallel with the communication controller circuit (8) and the subscriber interface circuit (13), said matrix being also connected to digital communication terminal equipment (12) included in the main terminal equipment in question and being controlled by a control processor (9) of the main terminal equipment, in particular to supervise the digital communication terminal equipment (12), the communication controller circuit (8) and the subscriber interface circuit (13).

2. Main terminal equipment according to Claim 1, characterized in that it includes an adapter (14) connected to the matrix port (11) to which the digital communication terminal equipment (12) is connected, in parallel with the latter, and to an external telephone terminal connector (23) connectable at the level of an R reference point.
